**Europäisches Patentamt**

**European Patent Office**

**Office européen des brevets**

(19)

(11) Veröffentlichungsnummer: **0 122 408**

**A2**

(12) # EUROPÄISCHE PATENTANMELDUNG

(21) Anmeldenummer: **84101896.3**

(22) Anmeldetag: **23.02.84**

(51) Int. Cl.³: **F 02 D 23/02**
**F 02 D 5/02, F 02 D 1/08**

(30) Priorität: **15.04.83 DE 3313732**

(43) Veröffentlichungstag der Anmeldung:
**24.10.84 Patentblatt 84/43**

(84) Benannte Vertragsstaaten:
**AT DE FR GB IT SE**

(71) Anmelder: **Klöckner-Humboldt-Deutz**
**Aktiengesellschaft**
**Deutz-Mülheimer-Strasse 111 Postfach 80 05 09**
**D-5000 Köln 80(DE)**

(72) Erfinder: **Nolte, Albert**
**Vasterstrasse 10**
**D-5000 Köln 30(DE)**

(54) Einrichtung zur Steuerung des Regelstangenanschlages einer Kraftstoffeinspritzpumpe.

(57) Die Erfindung beschreibt eine Einrichtung zur Steuerung des Regelstangenanschlages (3) an Einspritzpumpen für vorzugsweise augeladene Dieselbrennkraftmaschinen. Hierzu ist ein Stellglied (2) vorgesehen, dem ein Druckmittel über eine Druckmittelleitung (1) zugeführt wird und das in Abhängigkeit des Druckes den Regelstangenanschlag (3) verstellt. Der Druck des Druckmittels der Druckmittelleitung (1) des Stellgliedes (2) wird durch zwei in Reihe geschaltete elektromagnetische Steuerventile (6, 7) gesteuert, die von einer elektrisch arbeitenden Regeleinrichtung (8) in Abhängigkeit geeigneter Betriebsparameter der Brennkraftmaschine betätigt sind. Das eine elektromagnetische Steuerventil (6) dient zur Zusteuerung des Druckmittels und ist in Strömungsrichtung des Druckmittels vor dem Stellglied (2) vorgesehen, während das andere elektromagnetische Steuerventil (7) zum Absteuern des Druckmittels in Strömungsrichtung des Druckmittels hinter dem Stellglied (2) in der Druckmitteleitung (1) angeordnet ist.

EP 0 122 408 A2

5000 Köln 80, den 20.02.1984
D 83/22 AE-ZPB P/Ro

Einrichtung zur Steuerung des Regelstangenanschlages einer
Kratstoffeinspritzpumpe

Die Erfindung bezieht sich auf eine Einrichtung zur Steuerung eines Regelstangenanschlages einer Kraftstoffeinspritzpumpe, vorzugsweise für eine aufgeladene Dieselbrennkraftmaschine, mit einem von einem Druckmittel beaufschlagbaren Stellglied, durch das die Regelstangenanschlagsstellung in Abhängigkeit der Druckmittelbeaufschlagung veränderbar ist, und mit einem in der Druckmittelleitung des Stellgliedes angeordneten elektromagnetischen Steuerventil, das von einer elektrisch arbeitenden Regeleinrichtung in Abhängigkeit geeigneter Betriebsparameter der Brennkraftmaschine betätigbar ist.

Eine derart gattungsgemäße Einrichtung ist aus der DE-OS 26 50 247 bekannt. Hierbei ist vorgesehen, geeignete Betriebsparameter der Brennkraftmaschine wie beispielsweise Bauteiltemperatur, Drehzahl, Verbrennungslufttemperatur oder Umgebungstemperatur mittels geeigneter Meßwertgeber laufend zu erfassen, diese anhand von vorgegebenen Daten, z.B. Vollastkennfelder, auszuwerten und den die maximale Kraftstoffeinspritzmenge begrenzenden Regelstangenanschlag der Kraftstoffeinspritzpumpe in Abhängigkeit dieser Auswertung im Hinblick auf eine optimale Leistungsausbeute der Brennkraftmaschine unter Vermeidung von Überlastungen und Überhitzungen zu verstellen. Darüberhinaus auf die kann bisher übliche feste Blockierung des Regelstangenanschlages verzichtet werden, was insbesondere bei Brennkraftmaschinentypen, die unter sehr verschiedenartigen klimatischen Bedingungen, beispielsweise in unterschiedlichen Höhenlagen mit verschiedenem Luftdruck, im Hinblick auf eine optimale Zylinderfüllung von Vorteil ist. Zur Steuerung des Druckes des das Stellglied des Regelstangenanschlages beaufschlagenden Druckmittels dient das in der Druckmittelleitung angeordnete Magnetventil, das zum Zusteuern des Druckmittels mit einem Druckspeicher und zum Absteuern des Druckmittels mit einem Druckmittelvorratsbehälter verbunden ist. Der Druckspeicher ist hierbei notwendig, um das von einer Förderpumpe mit evtl. schwankendem Vordruck geförderte Druckmittel mit einem konstanten Druck vor dem Magnetventil im Hinblick auf eine stabile Regelstrecke bereitstellen zu können.

Als nachteilig bei der bekannten Einrichtung ist anzusehen, daß eine fein dosierbare und exakte Steuerung des Regelstangenanschlages nur bedingt möglich ist, da aufgrund der langen Strömungswege für das ab- und zuzusteuernde Druckmittel und der langen Schaltwege und der sich funktionsbedingt doppelt auswirkenden Eigenträgheit des elektromagnetischen Steuerventils kurze Regelzeiten des Stellgliedes und somit kleine und kurz aufeinanderfolgende Korrekturen des Regelstangenanschlages nicht möglich sind. Weiterhin beeinträchtigt der notwendigerweise vorzusehende Druckspeicher aufgrund von unvermeidbaren Fehlerquelle das Regelergebnis, so daß trotz des erheblichen Bauaufwandes ein exaktes Arbeiten dieser Einrichtung nicht gewährleistet ist.

Es ist daher Aufgabe der vorliegenden Erfindung, eine gattungsgemäße Einrichtung mit einfachen Mitteln derart zu verbessern, daß sie exakt arbeitet, wobei kurze Regelzeiten des Stellgliedes möglich sein sollen.

TN 0103 0027/0
(F 360/1
20000 5 83 p

Diese Aufgabe wird erfindungsgemäß dadurch gelöst, daß die Druckmittelleitung des Stellgliedes ein zweites elektromagnetisches, von der elektrisch arbeitenden Regeleinrichtung betätigbares Steuerventil aufweist, wobei das eine elektromagnetische Steuerventil zum Zusteuern des Druckmittels des Stellgliedes und das andere elektromagnetische Steuerventil zum Absteuern des Druckmittels des Stellgliedes vorgesehen ist. Durch die erfindungsgemäße Anordnung ist es in vorteilhafter Weise möglich, geringste Verstellungen des Regelstangenanschlages und somit eine sehr exakte Angleichung der Einspritzmengencharakteristik an Veränderungen des Betriebszustandes der Brennkraftmaschine mit sehr kurzen Regelzeiten durchführen zu können, da das Zusteuern und das Absteuern des Druckmittels durch zwei jeweils einzeln und unabhängig voneinander ansteuerbare und somit betätigbare Steuerventile erfolgt. Die Schaltwege der beiden Steuerventile sind dabei erheblich verringert, was sich ebenso wie die verminderte Eigenträgheit des Gesamtsystems günstig im Hinblick auf kurze Regelzeiten des Stellgliedes auswirkt. Darüberhinaus ist es beispielsweise auch in vorteilhafter Weise möglich, das Druckmittel - ohne einen Druckspeicher vorsehen zu müssen - mit unterschiedlichen Drücken dem zusteuernden elektromagnetischen Steuerventil zuführen zu lassen, da durch das getrennte Zusteuern und Absteuern Druckschwankungen des Druckmittels aufgefangen werden können. Somit sind die Fehler- und Störquellen des Gesamtsystems erheblich verringert.

In Ausgestaltung der Erfindung wird vorgeschlagen, daß die beiden elektromagnetischen Steuerventile in Reihe geschaltet sind und in Strömungsrichtung des Druckmittels das zusteuernde Steuerventil vor dem Stellglied und das absteuernde elektromagnetische Steuerventil hinter dem Stellglied angeordnet ist. Bei aufgeladenen Brennkraftmaschinen kann dabei in vorteilhafter Weise als Druckmittel des Stellgliedes Ladeluft verwendet werden, wobei die Ladeluft an dem zweiten Magnetventil einfach in die Umgebung abgesteuert werden kann, so daß besondere Rücklaufleitungen entfallen.

Weiterhin wird vorgeschlagen, daß das zusteuernde elektromagnetische Steuerventil stromlos geschlossen und das absteuernde elektromagnetische Steuerventil stromlos geöffnet ist, wodurch insbesondere bei Ausfall der elektrisch arbeitenden Regeleinrichtung eine Überbelastung der Brennkraftmaschine mit Sicherheit vermieden werden kann, da sich das Stellglied auf die übliche Minimal-Einspritzmenge einstellen wird.

In einer Weiterbildung der Erfindung ist vorgesehen, daß das Stellglied eine mit der elektrisch arbeitenden Regeleinrichtung verbundene Stellungsrückmeldeeinrichtung aufweist, die bevorzugt ein bewegungsfest mit dem Regelstangenanschlag gekoppeltes ferromagnetisches Element aufweist, das in einer ortsfesten Induktionsspule relativ zu dieser axial bewegbar ist, so daß bei Verstellungen des Regelstangenanschlages in der Induktionsspule eine Induktivitätsänderung hervorgerufen wird, die in dem Regelgerät als Stellungsgröße bzw. Korrekturgröße des Stellgliedes ausgewertet und bei nachfolgenden Steuerungsvorgängen berücksichtigt werden kann. Dies ist insbesondere für eine funktionstaugliche elektronische Angleichung der Einspritzmengencharakteristik an Vollastmengenkennfelder von wesentlichem Vorteil, da hierdurch mögliche Regelabweichungen, beispielsweise verursacht durch Verschleißerscheinungen der Steuerelemente oder durch aufgrund von Temperatureinflüssen geändertes Ansprechverhalten der Magnetventile, praktisch auszuschließen sind.

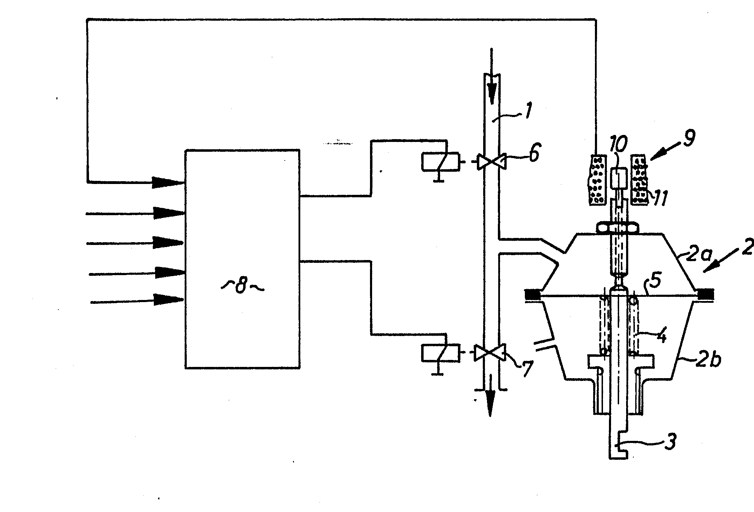

Im folgenden wird die Erfindung anhand des in der Zeichnung dargestellten Ausführungsbeispiels der Erfindung näher erläutert. In der Zeichnung ist die erfindungsgemäße Einrichtung schematisch mit ausschließlich zum Verständnis der Erfindung notwendigen Elementen dargestellt.

Von einem nicht näher dargestellten Abgasturbolader einer aufgeladenen Brennkraftmaschine führt eine Druckmittelleitung 1 zu einem Stellglied 2, durch das der Regelhebel 3 eines nicht näher dargestellten Regelstangenanschlages einer Kraftstoffeinspritzpumpe verstellbar ist. Das Stellglied 2 ist als handelsüblicher ladedruckabhängiger Volllastanschlag aufgebaut, indem zwischen zwei Gehäuseteilen 2a und 2b eine von einer Druckfeder 4 belastete Membran 5 luftdicht eingespannt ist, die bei Druckbeaufschlagung über den Regelhebel 3 die Verstellung des Regelstangenanschlages der Kraftstoffeinspritzpumpe bewirkt. In Strömungsrichtung des Druckmittels vor dem Stellglied 2 ist in der Druckmittelleitung 1 ein erstes elektromagnetisches Steuerventil 6 und in Strömungsrichtung des Druckmittels hinter dem Stellglied 2 ein zweites elektromagnetisches Steuerventil 7 angeordnet. Die elektromagnetischen Steuerventile 6 und 7 werden von einer elektrisch arbeitenden Regeleinrichtung 8, die von nicht gezeigten Meßwertgebern ermittelte Betriebsparameter der Brennkraftmaschine, wie beispielsweise Bauteiltemperatur, Drehzahl, Verbrennungslufttemperatur, Verbrennungsluftdruck als Eingangsgrößen auswertet und in Abhängigkeit dieser Auswertung die elektromagnetische Steuerventile 6 und 7 betätigt und somit die Druckmittelbeaufschlagung des Stellgliedes 2 regelt. Das elektromagnetische Steuerventil 6 dient zur Zusteuerung des Druckmittels und ist als stromlos geschlossenes Magnetventil ausgebildet und das stromlos geöffnete elektromagnetische Steuerventil 7 ist zum Absteuern des Druckmittels vorgesehen. Über das elektrisch arbeitende Regelgerät 8 werden die beiden elektromagnetischen Steuerventile 6 und 7 derart gesteuert, daß der Regelstangenanschlag immer die gerade zulässige höchst mögliche Einspritzmenge freigibt. Hierdurch ist es möglich, z.B. in Lastkraftwagen eingebaute Brennkraftmaschinen, die im sogenannten "Stop and go"-Betrieb eingesetzt und somit mit relativ niedriger Last betrieben werden, auf eine höhere Leistung einzustellen. Bei längerer und höherer Belastung wird beispielsweise über die Regeleinrichtung 8 und das elektromagnetische Steuerventil 7 Druckmittel abgesteuert, so daß der Regelstangenanschlag in Richtung kleinerer maximaler Einspritzmenge verstellt wird. Oberhalb des ladedruckabhängigen Vollastanschlages 2 ist eine Stellungsrückmeldeeinrichtung 9 vorgesehen, die ein mit dem Regelstangenanschlag bzw. dem Regelhebel 3 bewegungsfest gekoppeltes ferromagnetisches Element 10 aufweist, das in einer ortsfesten Induktionsspule axial bewegbar ist, wobei eine Bewegung des ferromagnetischen Elements 10 eine Induktivitätsänderung der Induktionsspule 11 hervorruft. Die Stellungsrückmeldeeinrichtung 9 ist elektrisch mit der Regeleinrichtung 8 verbunden, so daß die Induktivitätsänderung als Rückmeldesignal für eine Regelstangenverstellung in der Regeleinrichtung 8 abgespeichert und ausgewertet werden kann.

5000 Köln 80, den 20.02.1984
D 83/22 AE-ZPB P/Ro

P a t e n t a n s p r ü c h e

1.      Einrichtung zur Steuerung eines Regelstangenanschlages einer Kraftstoffeinspritzpumpe, vorzugsweise für
eine aufgeladene Dieselbrennkraftmaschine, mit einem von
einem Druckmittel beaufschlagbaren Stellglied (2), durch
das die Regelstangenanschlagsstellung in Abhängigkeit der
Druckmittelbeaufschlagung veränderbar ist, und mit einem
in einer Druckmittelleitung (1) des Stellgliedes (2) angeordneten elektromagnetischen Steuerventil (6), das von einer elektrisch arbeitenden Regeleinrichtung (8) in Abhängigkeit geeigneter Betriebsparameter der Brennkraftmaschine betätigbar ist,
dadurch gekennzeichnet, daß die Druckmittelleitung (1) des
Stellgliedes (2) ein zweites elektromagnetisches, von der
elektrisch arbeitenden Regeleinrichtung (8) betätigbares
Steuerventil (7) aufweist, wobei das eine elektromagnetische Steuerventil (6) zum Zusteuern des Druckmittels des
Stellgliedes (2) und das andere elektromagnetische Steuerventil (7) zum Absteuern des Druckmittels des Stellgliedes
(2) vorgesehen ist.

2.      Einrichtung nach Anspruch 2,
dadurch gekennzeichnet, daß die beiden elektromagnetischen
Steuerventile (6, 7) in Reihe geschaltet sind und daß in
Strömungsrichtung des Druckmittels das zusteuernde elektromagnetische Steuerventil (6) vor dem Stellglied (7) und
das absteuernde elektromagnetische Steuerventil (7) hinter
dem Stellglied (2) angeordnet sind.

3.    Einrichtung nach einem der Ansprüche 1 oder 2, dadurch gekennzeichnet, daß das zusteuernde elektromagnetische Ventil (6) stromlos geschlossen und das absteuernde elektromagnetische Steuerventil (7) stromlos geöffnet ist.

4.    Einrichtung nach einem der Ansprüche 1 bis 3, dadurch gekennzeichnet, daß das Stellglied (2) eine mit der elektrisch arbeitenden Regeleinrichtung (8) elektrisch verbundene Stellungsrückmeldeeinrichtung (9) aufweist.

5.    Einrichtung nach Anspruch 4, dadurch gekennzeichnet, daß die Stellungsrückmeldeeinrichtung (9) ein bewegungsfest mit dem Regelstangenanschlag (3) gekoppeltes ferromagnetisches Element (10) aufweist, das in einer ortsfesten Induktionsspule (11) relativ zu dieser axial bewegbar ist.

0122408

D 83/22